# EUROPEAN PATENT SPECIFICATION

(11) **EP 3 717 808 B1**
(45) Date of publication and mention of the grant of the patent: **17.06.2026**
(21) Application number: 18884157.1
(22) Date of filing: 29.11.2018
(51) Int. Cl.: F16J 15/02, F16J 15/3208, F16J 15/3212, F16J 15/3272, F16K 41/08, F16J 15/16

(54) **SEAL, ASSEMBLY, AND METHODS OF USING THE SAME**
DICHTUNG, ANORDNUNG UND VERFAHREN ZUR VERWENDUNG DAVON
JOINT D'ÉTANCHÉITÉ, ENSEMBLE ET PROCÉDÉS D'UTILISATION CORRESPONDANTS

(30) Priority: 30.11.2017 US 201762592757 P
(43) Date of publication of application: 07.10.2020
(73) Proprietor: Saint-Gobain Performance Plastics Corporation, Solon, OH 44139 (US)
(72) Inventor: TASLAKIAN, Bedros J., Northridge California 91326 (US); DELEUZE, Charles, Westborough Massachusetts 01581 (US); VAN GILS, Kris, 2950 Kapellen (BE); PROOST, Benny, 2550 Kontich (BE); AERTS, Peter, 2870 Ruisbroek (BE)
(74) Representative: Zimmermann & Partner Patentanwälte mbB
(86) International application number: PCT/US2018/062980
(87) International publication number: WO 2019/108745

(56) References cited:
- EP-A1- 3 093 538
- EP-A2- 0 230 120
- WO-A1-00/12920
- WO-A1-00/25048
- WO-A1-2009/158695
- FR-A1- 2 009 066
- JP-Y1- S5 127 401
- US-A- 2 387 182
- US-A- 4 739 997
- US-A1- 2006 006 605
- US-A1- 2009 146 379
- US-A1- 2010 237 566
- US-A1- 2012 112 421
- US-A1- 2014 070 494
- US-A1- 2014 291 936

## Description

### TECHNICAL FIELD

The present disclosure relates to seal and seal assemblies, and more particularly to seals with multiple components.

### BACKGROUND ART

Commonly, a fluid component is used to inhibit or facilitate flow of a fluid. The fluid component can include for example, a piston, a pipe junction, a pipe coupling, a pipe, a pipe bend, a manifold, an elbow, a valve, a pump, a regulator, a seam or weld line, a nozzle or sprayer, a threaded port, a sampling valve, an exhaust line, a fluid inlet or outlet, or may be another component. In some cases, fluid components may use seals or seal assemblies to prevent leakage, contain pressure, contain a desired substance within the fluid component, or exclude contamination from the fluid component. In some particular cases, fluid components may need seals or seal assemblies that are used in difficult installation environments, such as in non-direct reachable grooves in piston seals, or in operating conditions, such as subsea valves with extreme or harsh temperatures and pressures. In such cases, the seal or seal assembly require higher reliability to tolerate these environments and conditions that provides a more efficient ease of installation and use. EP0230120A2 relates to a sealing ring assembly suitable for a gland or piston seal, where a preformed resilient insert, preferably an elastomeric ring, is positioned in a ring mould, for example by having a channel fitted over an annular projection of the mould, so as to partly define the moulding cavity thereof.

There continues to be a need for seals and seal assemblies having improved sealing properties and higher reliabilities in difficult installation environments and harsh operating conditions.

### BRIEF DESCRIPTION OF THE DRAWINGS

Embodiments are illustrated by way of example and are not limited in the accompanying figures.
FIG. 1A includes a cross section plan view of a seal in accordance with an embodiment.
FIG. 1B includes a close up overhead view of a seal in accordance with an embodiment.
FIG. 1C includes a straight on overhead view of a seal in accordance with an embodiment.
FIG. 2A includes a cross section plan view of a seal in accordance with an embodiment.
FIG. 2B includes a close up overhead view of a seal in accordance with an embodiment.
FIG. 2C includes a straight on overhead view of a seal in accordance with an embodiment.
FIG. 3A includes a cross section plan view of a seal in accordance with an embodiment.
FIG. 3B includes a close up overhead view of a seal in accordance with an embodiment.
FIG. 3C includes a straight on overhead view of a seal in accordance with an embodiment.
FIG. 4A includes a cross section plan view of a seal in accordance with an embodiment.
FIG. 4B includes a close up overhead view of a seal in accordance with an embodiment.
FIG. 4C includes a straight on overhead view of a seal in accordance with an embodiment.
FIG. 5A includes a cross section plan view of a seal in accordance with an embodiment.
FIG. 5B includes a close up overhead view of a seal in accordance with an embodiment.
FIG. 6 includes a time vs. pressure test graph of a seal in accordance with a number of embodiments and prior art.
FIG. 7A includes a cross section plain view of a seal assembly in accordance with a number of embodiments.
FIG. 7B includes a cross section plain view of a seal assembly in accordance with a number of embodiments.
FIG. 8A includes a cross section plain view of a seal assembly in accordance with a number of embodiments.
FIG. 8B includes a cross section plain view of a seal assembly in accordance with a number of embodiments.
FIG. 8C includes a cross section plain view of a seal assembly in accordance with a number of embodiments.
FIG. 8D includes a cross section plain view of a seal assembly in accordance with a number of embodiments.
FIG. 9 includes a cross section plain view of a seal assembly in accordance with a number of embodiments.
FIG. 10A includes a cross section plain view of a seal assembly in accordance with a number of embodiments.
FIG. 10B includes a straight on overhead view of a seal in accordance with an embodiment.
FIG. 10C includes a cross section plain view of a seal assembly in accordance with a number of embodiments.
FIG. 11A includes a close up overhead view of a seal in accordance with an embodiment.
FIG. 11B includes a close up overhead view of a seal in accordance with an embodiment.
FIG. 11C includes a close up overhead view of a seal in accordance with an embodiment.
FIG. 11D includes a close up overhead view of a seal in accordance with an embodiment.
FIG. 12 includes a time vs. pressure test graph of a seal in accordance with an embodiment.
FIG. 13 includes a table of Nominal Seat Diameter vs. Maximum Seat Leakage of a seal in accordance with an embodiment.

### DETAILED DESCRIPTION OF THE PREFERRED EMBODIMENT(S)

The following description in combination with the figures is provided to assist in understanding the teachings disclosed herein. The following discussion will focus on specific implementations and embodiments of the teachings. This focus is provided to assist in describing the teachings and should not be interpreted as a limitation on the scope or applicability of the teachings. However, other embodiments can be used based on the teachings as disclosed in this application.

The terms "comprises," "comprising," "includes," "including," "has," "having" or any other variation thereof, are intended to cover a non-exclusive inclusion. For example, a method, article, or apparatus that comprises a list of features is not necessarily limited only to those features but may include other features not expressly listed or inherent to such method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

Also, the use of "a" or "an" is employed to describe elements and components described herein. This is done merely for convenience and to give a general sense of the scope of the invention. This description should be read to include one, at least one, or the singular as also including the plural, or vice versa, unless it is clear that it is meant otherwise. For example, when a single item is described herein, more than one item may be used in place of a single item. Similarly, where more than one item is described herein, a single item may be substituted for that more than one item.

Unless otherwise defined, all technical and scientific terms used herein have the same meaning as commonly understood by one of ordinary skill in the art to which this invention belongs. The materials, methods, and examples are illustrative only and not intended to be limiting. To the extent not described herein, many details regarding specific materials and processing acts are conventional and may be found in textbooks and other sources within the seal and/or seal assembly arts.

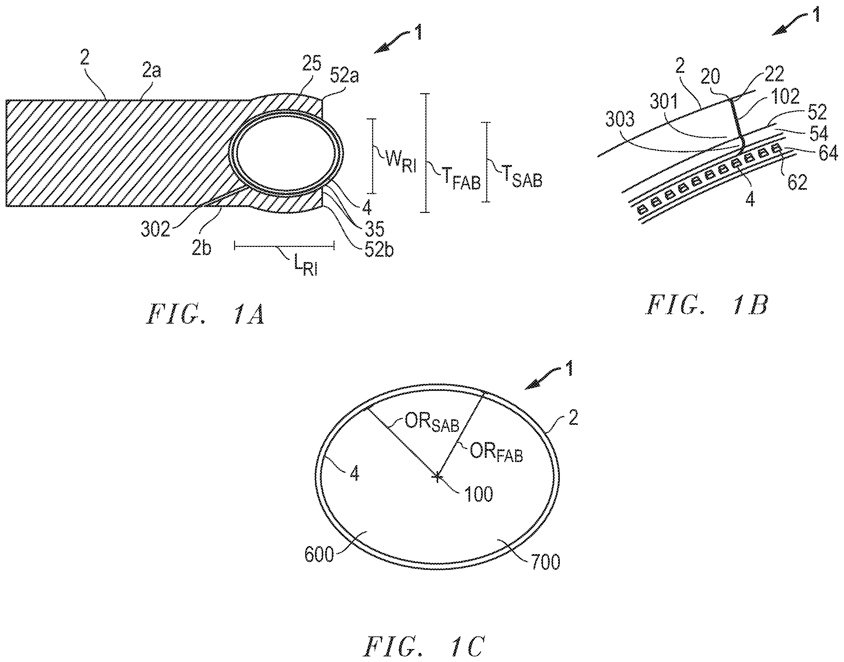

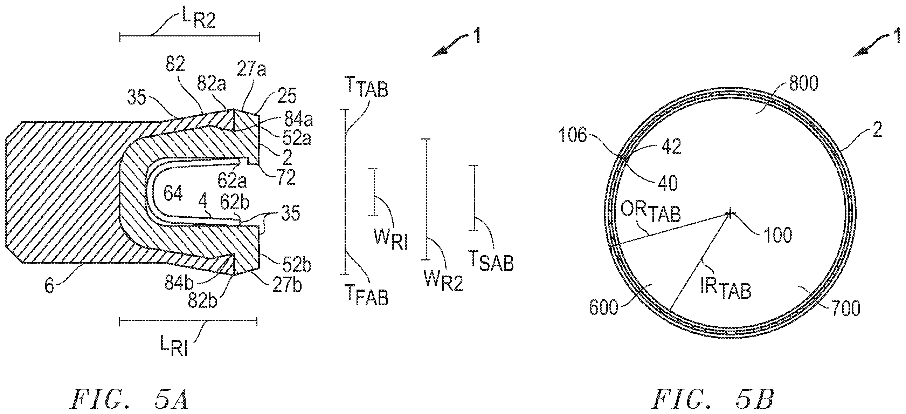

The present invention is defined in the claims. Referring initially to FIGS. 1A-5C, a seal 1 is shown according to a number of embodiments. The seal 1 includes a first annular body 2 disposed about a central axis 100. The first annular body 2 has an inner radius IR_{FAB} and an outer radius OR_{FAB} about the central axis 100. The first annular body 2 also may include a nominal axial thickness T_{FAB}. The first annular body 2 further includes a first circumferential end 20 and a second circumferential end 22 defining a first split 102 along the circumference of the first annular body 2. In a number of embodiments, the first annular body 2 can be generally cylindrical and can further include an aperture 600. In a particular aspect, the aperture 600 can be coaxial, or substantially coaxial, with the central axis 100. The first annular body 2 may define an exterior surface 35 of the seal 1. The first annular body 2 includes at least one axial or radial lip 52. The at least one axial or radial lip 52 may extend axially or radially from the first annular body 2. In a number of embodiments, the at least one axial or radial lip 52 may be integral with the first annular body 2. In a number of embodiments, the at least one axial or radial lip 52 may have a material composition different with the composition first annular body 2. In a number of embodiments, the at least one axial or radial lip 52 may include a ramp 27 extending in the radial or axial direction. In an embodiment, the one axial or radial lip 52 may form a recess 54. In an embodiment, the first annular body 2 may include a first axial lip 52a and a second axial lip 52b that may form a recess 54. In a number of embodiments, the first annular body 2 may include a first axial lip 52a and a second axial lip 52b that may each include a ramp 27a, 27b extending in the radial or axial direction. In a number of embodiments, the first annular body 2 may include a first axial lip 52a and a second axial lip 52b that may form a recess 54 that forms a "U-shaped" cross-section in the radial direction. The recess 54 can be coaxial to the central axis 100. The recess 54 may be located axially or radially adjacent the axial or radial lip 52. The recess 54 can define a generally rectilinear cross section when viewed in a direction perpendicular to a plane extending radially from the central axis 100. Moreover, the recess 54 can comprise one or more fillets, rounded edges, angular components, or any combination thereof. The first annular body 2 may be formed in different cross-sectional geometries. Suitable geometries may include a square, rectangle, trapezoid, and other sealing element geometries that will be familiar to one of ordinary skill in the art.

In a number of embodiments, the inner radius IR_{FAB} of the first annular body 2 of the seal 1 may be at least 1 mm, 5 mm, at least 10 mm, at least 25 mm, at least 50 mm, at least 75 mm, at least 100 mm, at least 150 mm, at least 250 mm, at least 500 mm. The inner radius IR_{FAB} of the first annular body 2 of the seal 1 may be no greater than 5000 mm, no greater than 4000 mm, no greater than 3000 mm, no greater than 2000 mm, no greater than 1500 mm, no greater than 1000 mm.

In a number of embodiments, the outer radius OR_{FAB} of the first annular body 2 of the seal 1 may be at least 1 mm, 5 mm, at least 10 mm, at least 25 mm, at least 50 mm, at least 75 mm, at least 100 mm, at least 150 mm, at least 250 mm, at least 500 mm. The outer radius OR_{FAB} of the first annular body 2 of the seal 1 may be no greater than 5000 mm, no greater than 4000 mm, no greater than 3000 mm, no greater than 2000 mm, no greater than 1500 mm, no greater than 1000 mm.

In a number of embodiments, the nominal axial thickness T_{FAB} of the first annular body 2 of the seal 1 may be at least 1 mm, 5 mm, at least 10 mm, at least 25 mm, at least 50 mm, at least 75 mm, at least 100 mm, at least 150 mm, at least 250 mm, at least 500 mm. The nominal axial thickness T_{FAB} of the first annular body 2 of the seal 1 may be no greater than 5000 mm, no greater than 4000 mm, no greater than 3000 mm, no greater than 2000 mm, no greater than 1500 mm, no greater than 1000 mm.

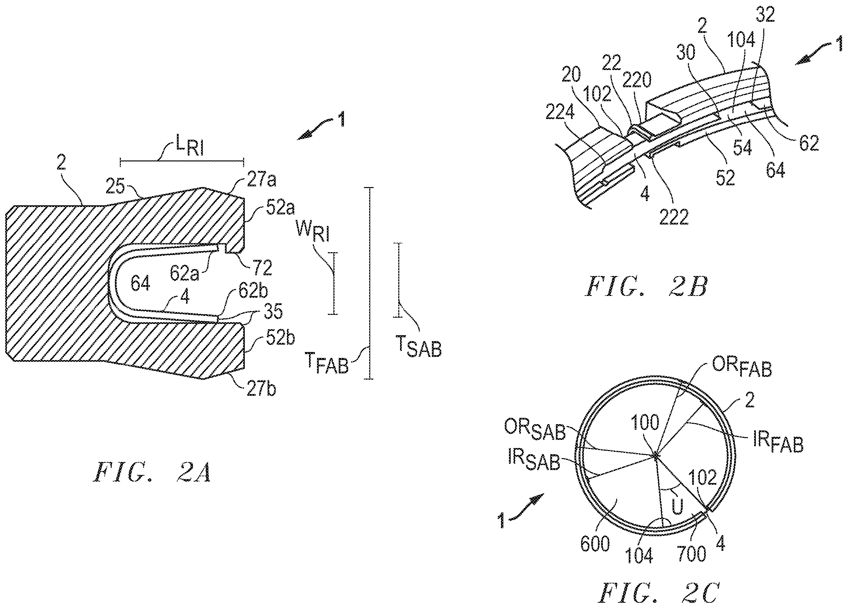

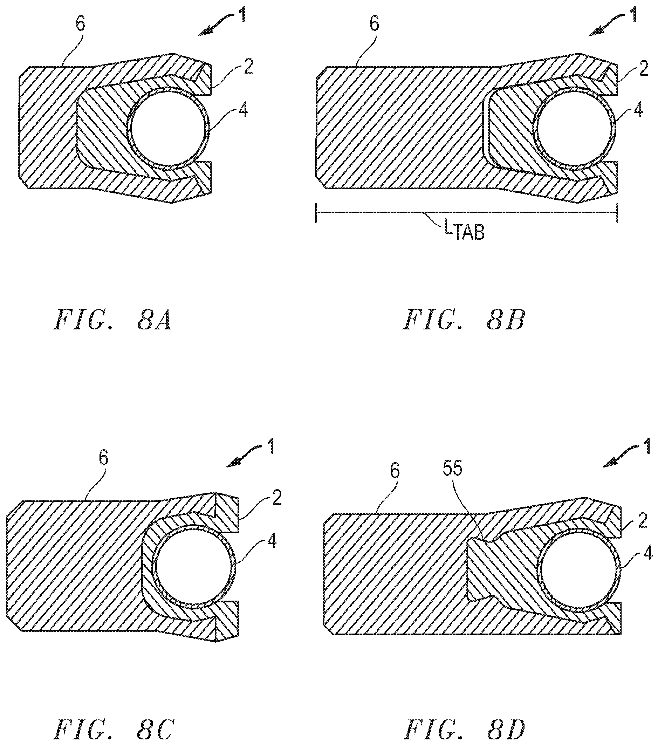

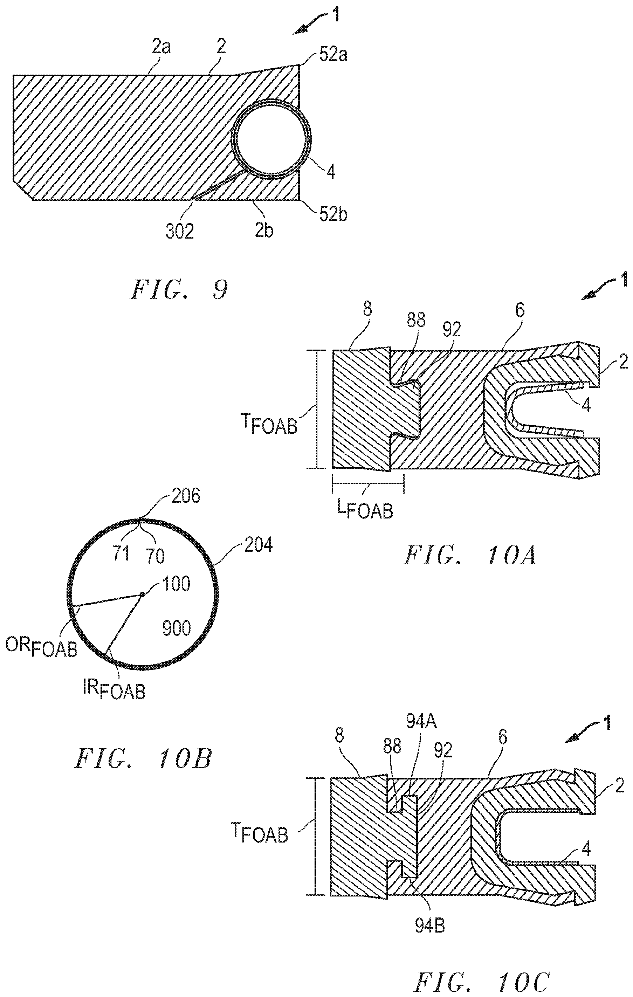

Still referring to FIGS. 1A-5C, the seal 1 includes a second annular body 4 disposed about a central axis 100. The second annular body 4 has an inner radius IR_{SAB} and an outer radius OR_{SAB} about the central axis 100. The second annular body 4 also may include a nominal axial thickness T_{SAB}. The second annular body 4 further includes a first circumferential end 30 and a second circumferential end 32 defining a first split 104 along the circumference of the second annular body 4. The second annular body 4 is generally cylindrical and further includes an aperture 700. The aperture 700 is substantially coaxial, with the central axis 100. The aperture 700 is substantially coaxial with the aperture 600 of the first annular body 2. The second annular body 4 defines the exterior surface 35 of the seal 1. In a number of embodiments, the second annular body 4 may include at least one axial or radial lip 62. In a number of embodiments, the at least one axial or radial lip 52 may be integral with the first annular body 2. In a number of embodiments, the at least one axial or radial lip 52 may have a material composition different with the composition second annular body 4. The at least one axial or radial lip 62 may extend axially or radially from the second annular body 4. In an embodiment, the one axial or radial lip 62 may form a recess 64. In a number of embodiments, as shown in FIGS. 2A, 3A, and 4A, the second annular body 4 may include a first axial lip 62a and a second axial lip 62b that may form a recess 64 that forms a "U-shaped" cross-section in the radial direction. In an embodiment, as shown in FIGs. 1A and 9, the second annular body 4 may have a circular cross-section with a recess 64 formed on its interior. The recess 64 can be coaxial to the central axis 100. The recess 64 may be located axially or radially adjacent the axial or radial lip 62. The recess 64 can define a generally rectilinear cross section when viewed in a direction perpendicular to a plane extending radially from the central axis 100. Moreover, the recess 64 can comprise one or more fillets, rounded edges, angular components, or any combination thereof. The second annular body 4 may be formed in different cross-sectional geometries. Suitable geometries may include a square, rectangle, trapezoid, and other sealing element geometries that will be familiar to one of ordinary skill in the art. In a number of embodiments, the second annular body 4 may be disposed within the recess 54 formed between the first lip 52a and the second lip 52b of the first annular body 2. In a number of embodiments, the first annular body 2 may include at least one axial step 72. In a number of embodiments, as shown in FIG. 8A, the first annular body 2 may include a plurality of axial steps 72. In a number of embodiments, the at least one axial step 72 may lock or inhibit movement of the second annular member 4 to the first annular member 2. In a number of embodiments, as shown in FIGS. 2A, 3A, 4A, and 5A, the at least one axial step 72 may lock or inhibit movement of the second annular member 4 to the first annular member 2 in the radial direction. In another embodiments, as shown in FIG. 1A, the first annular body 2 may axially and/or radially compress the second annular body 4 to form an interference fit between the two components. In operation and installation, due to the mechanical compression of the second annular body 4 within an annular region between the inside radius of the first annular body 2 and the outside diameter of the first annular body 2 (i.e. the recess 54), the circumferential ends 30, 32 of the second annular body 4 are squeezed together and forced against each other. Thus, the circumferential ends 30, 32 of the second annular body 4 form a leak proof surface 35 when paired with a sealing surface. Accordingly, leakage of process fluid may be prevented. In an embodiment, as shown in FIG. 9, at least one of the first lip 52a or the second lip 52 may be axially tapered.

In an embodiment, the recess 54 of the first annular body 2 may have a length L_{R1} of at least 1 mm, 5 mm, at least 10 mm, at least 25 mm, at least 50 mm, at least 75 mm, at least 100 mm, at least 150 mm, at least 250 mm, at least 500 mm. The recess 54 of the first annular body 2 may have a length L_{R1} that may be no greater than 5000 mm, no greater than 4000 mm, no greater than 3000 mm, no greater than 2000 mm, no greater than 1500 mm, no greater than 1000 mm. In an embodiment, the recess 54 of the first annular body 2 may have a width W_{R1} of at least 1 mm, 5 mm, at least 10 mm, at least 25 mm, at least 50 mm, at least 75 mm, at least 100 mm, at least 150 mm, at least 250 mm, at least 500 mm. The recess 54 of the first annular body 2 may have a width W_{R1} that may be no greater than 5000 mm, no greater than 4000 mm, no greater than 3000 mm, no greater than 2000 mm, no greater than 1500 mm, no greater than 1000 mm. In a number of embodiments, the width W_{R1} of the recess 54 of the first annular body 2 may vary along its length L_{R1}.

In a number of embodiments, the inner radius IR_{SAB} of the second annular body 4 of the seal 1 may be at least 1 mm, 5 mm, at least 10 mm, at least 25 mm, at least 50 mm, at least 75 mm, at least 100 mm, at least 150 mm, at least 250 mm, at least 500 mm. The inner radius IR_{SAB} of the second annular body 4 of the seal 1 may be no greater than 5000 mm, no greater than 4000 mm, no greater than 3000 mm, no greater than 2000 mm, no greater than 1500 mm, no greater than 1000 mm.

In a number of embodiments, the outer radius OR_{SAB} of the second annular body 4 of the seal 1 may be at least 1 mm, 5 mm, at least 10 mm, at least 25 mm, at least 50 mm, at least 75 mm, at least 100 mm, at least 150 mm, at least 250 mm, at least 500 mm. The outer radius OR_{SAB} of the second annular body 4 of the seal 1 may be no greater than 5000 mm, no greater than 4000 mm, no greater than 3000 mm, no greater than 2000 mm, no greater than 1500 mm, no greater than 1000 mm.

In a number of embodiments, the nominal axial thickness T_{SAB} of the second annular body 4 of the seal 1 may be at least 1 mm, 5 mm, at least 10 mm, at least 25 mm, at least 50 mm, at least 75 mm, at least 100 mm, at least 150 mm, at least 250 mm, at least 500 mm. The nominal axial thickness T_{SAB} of the second annular body 4 of the seal 1 may be no greater than 5000 mm, no greater than 4000 mm, no greater than 3000 mm, no greater than 2000 mm, no greater than 1500 mm, no greater than 1000 mm.

The circumferential split 102 of the first annular body 2 is offset from the circumferential split 104 of the second annular body 4. The circumferential split 102 of the first annular body 2 is offset from the circumferential split 104 of the second annular body 2 at an arc distance defined by a central angle C, where the central angle C is no less than 15°, such as no less than 30°, such as no less than 45°, such as no less than 60°, or such as no less than 90.° In a number of embodiments, the circumferential split 102 of the first annular body 2 may be offset from the circumferential split 104 of the second annular body 2 at an arc distance defined by a central angle C, where the central angle C may be no greater than 180°, such as no greater than 135°, such as no greater than 120°, such as no greater than 90°, or such as no greater than 60°. The second annular body 4 is adapted to force the first circumferential split 102 of the first annular body 2 to close around a fluid component 150. In such a way, a radially outside surface of the first annular body 2 faces the second annular body 4. During operation, the second annular body 4 may be compressed so that at least a portion of the second annular body 4 presses against the radially outer of first annular body 2. Accordingly, the first annular body 2 may be energized and a radially directed sealing force may be applied. Accordingly, the seal 1 may establish a seal against a sealing surface in an assembly 200.

Referring to FIGS. 5A-5B, the seal 1 can include a third annular body 6 disposed about a central axis 100. The third annular body 6 may have an inner radius IR_{TAB} and an outer radius OR_{TAB} about the central axis 100. The third annular body 6 also may include a nominal axial thickness T_{SAB}. The third annular body 6 may further include a first circumferential end 40 and a second circumferential end 42 defining a first split 106 along the circumference of the third annular body 6. In a number of embodiments, the third annular body 6 can be generally cylindrical and can further include an aperture 800. In a particular aspect, the aperture 800 can be coaxial, or substantially coaxial, with the central axis 100. The aperture 800 may be coaxial, or substantially coaxial with the aperture 600 of the first annular body 2 and/or the aperture 700 of the second annular body 4. The third annular body 6 may define the exterior surface 35 of the seal 1. In a number of embodiments, the third annular body 6 may include at least one axial or radial lip 82. In a number of embodiments, the at least one axial or radial lip 82 may be integral with the third annular body 6. In a number of embodiments, the at least one axial or radial lip 82 may have a material composition different with the composition third annular body 6. The at least one axial or radial lip 82 may extend axially or radially from the third annular body 6. In an embodiment, the one axial or radial lip 82 may form a recess 94. In a number of embodiments, as shown in FIGS. 5A-5B, the third annular body 6may include a first axial lip 82a and a second axial lip 82b that may form a recess 94 that forms a "U-shaped" cross-section in the radial direction. The recess 94 can be coaxial to the central axis 100. The recess 94 may be located axially or radially adjacent the axial or radial lip 82. The recess 94 can define a generally rectilinear cross section when viewed in a direction perpendicular to a plane extending radially from the central axis 100. Moreover, the recess 94 can comprise one or more fillets, rounded edges, angular components, or any combination thereof. The third annular body 6 may be formed in different cross-sectional geometries. Suitable geometries may include a square, rectangle, trapezoid, and other sealing element geometries that will be familiar to one of ordinary skill in the art. In a number of embodiments, the first annular body 2 and/or the second annular body 4 may be disposed within the recess 94 formed between the first lip 82a and the second lip 82b of the third annular body 6. In a number of embodiments, the third annular body 6 may include an edge 84a, 84b adapted to provide an interference fit with the first annular body 2. In an embodiment, the third annular body 6 may radially compress the first annular body 2 to form an interference fit between the two components. In an embodiment, as shown in Figs. 8A-8C, the recess may be circular or oval to accommodate a circular or oval second annular body 4. In an embodiment, as shown in FIGS. 8B-8D, the length of the third annular body 6 may be significantly greater than that of the first annular body 2. In another embodiment, as shown in FIG. 8D, the first annular body 2 may include a dovetail 55 to form a mechanical connection with the third annular body 6.

In an embodiment, as shown best in FIG. 8B, the third annular body 6 may have a length L_{TAB} of at least 1 mm, 5 mm, at least 10 mm, at least 25 mm, at least 50 mm, at least 75 mm, at least 100 mm, at least 150 mm, at least 250 mm, at least 500 mm. The third annular body 6 may have a length L_{TAB} may have a length L_{TAB} that may be no greater than 5000 mm, no greater than 4000 mm, no greater than 3000 mm, no greater than 2000 mm, no greater than 1500 mm, no greater than 1000 mm. In an embodiment, the recess 94 of the third annular body 6 may have a length L_{R2} of at least 1 mm, 5 mm, at least 10 mm, at least 25 mm, at least 50 mm, at least 75 mm, at least 100 mm, at least 150 mm, at least 250 mm, at least 500 mm. The recess 94 of the third annular body 6 may have a length L_{R2} that may be no greater than 5000 mm, no greater than 4000 mm, no greater than 3000 mm, no greater than 2000 mm, no greater than 1500 mm, no greater than 1000 mm. In an embodiment, the recess 94 of the third annular body 6 may have a width W_{R2} of at least 1 mm, 5 mm, at least 10 mm, at least 25 mm, at least 50 mm, at least 75 mm, at least 100 mm, at least 150 mm, at least 250 mm, at least 500 mm. The recess 94 of the first annular body 2 may have a width W_{R2} that may be no greater than 5000 mm, no greater than 4000 mm, no greater than 3000 mm, no greater than 2000 mm, no greater than 1500 mm, no greater than 1000 mm. In a number of embodiments, the width W_{R2} of the recess 94 of the third annular body 6 may vary along its length L_{R2}.

In a number of embodiments, the inner radius IR_{TAB} of the third annular body 6 of the seal 1 may be at least 1 mm, 5 mm, at least 10 mm, at least 25 mm, at least 50 mm, at least 75 mm, at least 100 mm, at least 150 mm, at least 250 mm, at least 500 mm. The inner radius IR_{TAB} of the third annular body 6 of the seal 1 may be no greater than 5000 mm, no greater than 4000 mm, no greater than 3000 mm, no greater than 2000 mm, no greater than 1500 mm, no greater than 1000 mm.

In a number of embodiments, the outer radius OR_{TAB} of the third annular body 6 of the seal 1 may be at least 1 mm, 5 mm, at least 10 mm, at least 25 mm, at least 50 mm, at least 75 mm, at least 100 mm, at least 150 mm, at least 250 mm, at least 500 mm. The outer radius OR_{TAB} of the third annular body 6 of the seal 1 may be no greater than 5000 mm, no greater than 4000 mm, no greater than 3000 mm, no greater than 2000 mm, no greater than 1500 mm, no greater than 1000 mm.

In a number of embodiments, the nominal axial thickness T_{TAB} of the third annular body 6 of the seal 1 may be at least 1 mm, 5 mm, at least 10 mm, at least 25 mm, at least 50 mm, at least 75 mm, at least 100 mm, at least 150 mm, at least 250 mm, at least 500 mm. The nominal axial thickness T_{TAB} of the third annular body 6 of the seal 1 may be no greater than 5000 mm, no greater than 4000 mm, no greater than 3000 mm, no greater than 2000 mm, no greater than 1500 mm, no greater than 1000 mm.

Referring to FIGS. 10A-10C, the seal 1 can include a fourth annular body 8 disposed about a central axis 100. The fourth annular body 8 may have an inner radius IR_{FOAB} and an outer radius OR_{FOAB} about the central axis 100. The fourth annular body 8 also may include a nominal axial thickness T_{FOAB}. The fourth annular body 8 may further include a first circumferential end 70 and a second circumferential end 72 defining a first split 206 along the circumference of the fourth annular body 8. In a number of embodiments, the fourth annular body 8can be generally cylindrical and can further include an aperture 900. In a particular aspect, the aperture 900 can be coaxial, or substantially coaxial, with the central axis 100. The aperture 900 may be coaxial, or substantially coaxial with the aperture 600 of the first annular body 2, the aperture 700 of the second annular body 4, and/or the aperture 800 of the third annular body 6. The fourth annular body 8 may define the exterior surface 35 of the seal 1. In a number of embodiments, the fourth annular body 8 may include at least one axial or radial lip 92. In a number of embodiments, the at least one axial or radial lip 92 may be integral with the fourth annular body 8. In a number of embodiments, the at least one axial or radial lip 92 may have a material composition different than the composition of the fourth annular body 8. The at least one axial or radial lip 92 may extend axially or radially from the fourth annular body 8. In an embodiment, as shown in FIG. 10A, the one axial or radial lip 92 may form a male tongue or dovetail. In another embodiment, as shown in FIG. 10C, the one axial or radial lip 92 may form a T-connection with a first flange 94A and a second flange 94B. The T-connection may perform under high pressure situations (above 3 ksi). The fourth annular body 8 may be formed in different cross-sectional geometries. Suitable geometries may include a square, rectangle, trapezoid, and other sealing element geometries that will be familiar to one of ordinary skill in the art. In a number of embodiments, as shown in Figs. 10A-10C, the at least one axial or radial lip 92 may form a mechanical connection with an opposite female portion 88 of the third annular body 6 to form an interference fit between the two components 6. In an embodiment, the fourth annular body 8 may radially compress the third annular body 6 to form an interference fit between the two components.

In an embodiment, as shown best in FIG. 10A, the fourth annular body 8 may have a length L_{FOAB} of at least 1 mm, 5 mm, at least 10 mm, at least 25 mm, at least 50 mm, at least 75 mm, at least 100 mm, at least 150 mm, at least 250 mm, at least 500 mm. The fourth annular body 8 may have a length L_{FOAB} that may be no greater than 5000 mm, no greater than 4000 mm, no greater than 3000 mm, no greater than 2000 mm, no greater than 1500 mm, no greater than 1000 mm.

In a number of embodiments, as shown in FIG. 10B, the inner radius IR_{FOAB} of the fourth annular body 8 of the seal 1 may be at least 1 mm, 5 mm, at least 10 mm, at least 25 mm, at least 50 mm, at least 75 mm, at least 100 mm, at least 150 mm, at least 250 mm, at least 500 mm. The inner radius IR_{FOAB} of the fourth annular body 8 of the seal 1 may be no greater than 5000 mm, no greater than 4000 mm, no greater than 3000 mm, no greater than 2000 mm, no greater than 1500 mm, no greater than 1000 mm.

In a number of embodiments, as shown in FIG. 10B, the outer radius OR_{FOAB} of the fourth annular body 8 of the seal 1 may be at least 1 mm, 5 mm, at least 10 mm, at least 25 mm, at least 50 mm, at least 75 mm, at least 100 mm, at least 150 mm, at least 250 mm, at least 500 mm. The outer radius OR_{FOAB} of the fourth annular body 8 of the seal 1 may be no greater than 5000 mm, no greater than 4000 mm, no greater than 3000 mm, no greater than 2000 mm, no greater than 1500 mm, no greater than 1000 mm.

In a number of embodiments, the nominal axial thickness T_{FOAB} of the fourth annular body 8 of the seal 1 may be at least 1 mm, 5 mm, at least 10 mm, at least 25 mm, at least 50 mm, at least 75 mm, at least 100 mm, at least 150 mm, at least 250 mm, at least 500 mm. The nominal axial thickness T_{FOAB} of the fourth annular body 8 of the seal 1 may be no greater than 5000 mm, no greater than 4000 mm, no greater than 3000 mm, no greater than 2000 mm, no greater than 1500 mm, no greater than 1000 mm.

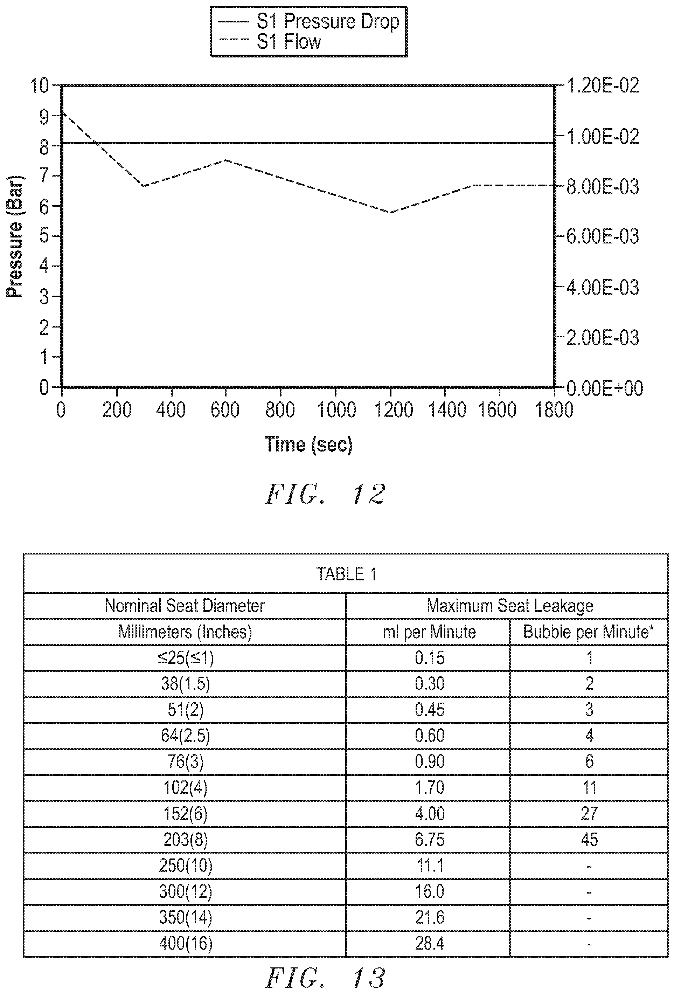

FIGs. 12-13 show a time vs. pressure test graph, and a table of Nominal Seat Diameter vs. Maximum Seat Leakage of a seal as shown in FIG. 10A-10B respectively. As shown in FIGs. 12-13, the seal 1 of FIG. 10A-10B exhibits minor leakage when measured with a flowmeter at 8 bar pressure passing class VI according to the ANSI FCl_70-2 specification.

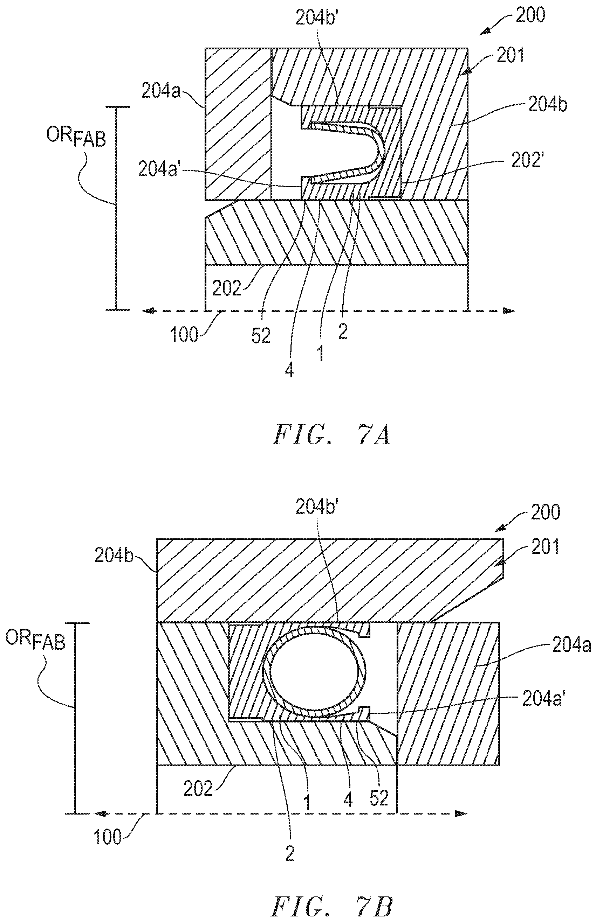

Referring to FIGS. 7A-7B, in a number of embodiments, the seal 1 may be used or be a component in an assembly 200 disposed about a central axis 100. In a non-limiting embodiment, the assembly 200 may be a valve assembly. In a non-limiting embodiment, the valve assembly 200 may be a ball valve assembly. In a number of embodiments, the assembly 200 may include a number of sealing surfaces of any of its components (i.e. fluid components). In a number of embodiments, the assembly 200 may include a housing 201 including a sealing surface. In a number of embodiments, the assembly 200 may include at least one rod or stem 202 including a sealing surface. In an embodiment, optionally, the assembly 200 or housing 201 may include at least one bonnet 204 including a sealing surface. The bonnet 204 can generally include an annular body disposed about a central axis 100. In a number of embodiments, the assembly 200 or housing 201 may include a first bonnet 204a and a second bonnet 204b including sealing surfaces. The stem 202 may extend axially through at least one of the first bonnet 204a or the second bonnet 204b. The exterior surface of the seal 1 (including at least one of the first annular body 2, second annular body 4, or optionally the third annular body 6) may contact at least one of the components of the assembly 200 (including, but not limited to, the housing 201, bonnet 204a, 204b, or stem 202) to provide a radial or axial force against at least one component of the assembly 200. In a number of embodiments, the seal 1 may be adapted to contact and provide a seal with the at least one bonnet 204a, 204b, and contact and provide a seal with the stem 202 to provide a seal in at least one of an axial and radial direction relative to the seal 1. In a number of embodiments, the assembly 200 could include additional parts (not shown) including, but not limited to, a ball member, a first passageway to the valve, a second passageway from the valve, or may be another element. In a number of embodiments, the assembly 200 may include a seal 1 between a first fluid component (for example, first bonnet 204a having an axis and a first end 204a'), and a second fluid component (for example, second bonnet 204b having an axis and a second end 204b') such that it operatively connects the first end 204a' of the first fluid component 204a to the second end 204b' of the second fluid component 204b. In a number of embodiments, the assembly 200 may include a seal 1 between a first fluid component (for example, first bonnet 204a having an axis and a first end 204a' or second bonnet 204b having an axis and a second end 204b') and a second fluid component (for example, the stem 202 having a second end 202') such that it operatively connects the first end 204a', 204b' of the first fluid component 204a, 204b to the second end 202' of the second fluid component 202. As shown in FIG. 7A, the rod or stem 202 may have a sealing surface contacting the seal 1, while at least one bonnet 204 or other component of the housing 201 may also have a sealing surface contacting the seal, where the housing 201 has a void where the seal is disposed. As shown in FIG. 7B, the rod or stem 202 may have a sealing surface contacting the seal 1, while at least one bonnet 204 or other component of the housing 201 may also have a sealing surface contacting the seal, where the rod or stem 202 has a void where the seal is disposed.

In a number of embodiments, an additional anti-rotational element 850 may be included within the assembly to positively capture the seal 1 and prevent the seal 1 from rotating. The anti-rotational element 850 may be one or more pins, staples, or screws applied in a radial fashion to a component of the assembly 200. One or more thru-holes may be drilled into a component of the assembly 200 and an anti-rotational element 850 may be applied to the seal 1. The through holes and the anti-rotational element 850 may or may not be threaded. In some embodiments, the anti-rotational element 850 may extend through a component of the assembly 200 and the seal in a radial direction. In some embodiments, the anti-rotational element 850 may extend through a component of the assembly 200 and the seal in an axial direction. The anti-rotational element 850 may be formed of plastic or polymer. The anti-rotational element 850 would typically not be formed of a metal.

In a number of embodiments, the seal 1 (or any of its subcomponents including, but not limited to, the first annular body 2 or any of its lips 52, the second annular body 4 or any of its lips 64, the third annular body 6 any of its lips 82, or the fourth annular body 8, or its at least one lip 92) can include any material commonly used in the seal arts. The seal 1 (or any of its subcomponents including, but not limited to, the first annular body 2 or any of its lips 52, the second annular body 4 or any of its lips 64, the third annular body 6 or any of its lips 82, or the fourth annular body 8, or its at least one lip 92)) can comprise any suitable material with sufficient rigidity to withstand axial and longitudinal forces. In a particular embodiment, the seal 1 (or any of its subcomponents including, but not limited to, the first annular body 2 or any of its lips 52, the second annular body 4 or any of its lips 64, the third annular body 6 or any of its lips 82, or the fourth annular body 8, or its at least one lip 92) can include a polymer, such as, for example, ultra-high molecular weight polyurethane (UHMWPE), poly(vinyl chloride) (PVC), a polyketone, a polyaryletherketone (PEAK) such as polyether ether ketone (PEEK), a polyaramid, a polyimide, a polytherimide, a polyphenylene sulfide, a polyetherslfone, a polysulfone, a polypheylene sulfone, a polyamideimide, ultra high molecular weight polyethylene, a fluoropolymer, a polyamide, a polybenzimidazole, or any combination thereof. An example fluoropolymer includes fluorinated ethylene propylene (FEP), polytetrafluoroethylene (PTFE), polyvinylidene fluoride (PVDF), perfluoroalkoxy (PFA), a terpolymer of tetrafluoroethylene, hexafluoropropylene, and vinylidene fluoride (THV), polychlorotrifluoroethylene (PCTFE), ethylene tetrafluoroethylene copolymer (ETFE), ethylene chlorotrifluoroethylene copolymer (ECTFE), aliphatic polyamides, or even para-aramids such as Kevlar^{®}, or any combination thereof. The polymer may be injection-molded. In another embodiment, the seal 1 (or any of its subcomponents including, but not limited to, the first annular body 2 or any of its lips 52, the second annular body 4 or any of its lips 64, the third annular body 6 or any of its lips 82, or the fourth annular body 8, or its at least one lip 92) can comprise a metal or alloy (such as, but not limited to, aluminum, chromium, nickel, zinc, copper, magnesium, tin, platinum, titanium, tungsten, lead, iron, bronze, steel, spring steel, stainless steel) formed through a machining process. In a number of embodiments, the metal may be lubricious. In yet another embodiment, the seal 1 (or any of its subcomponents including, but not limited to, the first annular body 2 or any of its lips 52, the second annular body 4 or any of its lips 64, the third annular body 6 or any of its lips 82, or the fourth annular body 8, or its at least one lip 92) can comprise a ceramic or any other suitable material. The seal 1 (or any of its subcomponents including, but not limited to, the first annular body 2 or any of its lips 52, the second annular body 4 or any of its lips 64, the third annular body 6 or any of its lips 82, or the fourth annular body 8, or its at least one lip 92) can comprise a homogenous composition or may comprise two or more discrete portions having different compositions. The seal 1 (or any of its subcomponents including, but not limited to, the first annular body 2 or any of its lips 52, the second annular body 4 or any of its lips 64, the third annular body 6 or any of its lips 82, or the fourth annular body 8, or its at least one lip 92) can be formed from a single piece, two pieces, or several pieces joined together by melting, sintering, welding, adhesive, fasteners, threading, or any other suitable fastening means. Moreover, in one non-limiting embodiment, although not applicable to all embodiments, the seal 1 (or any of its subcomponents including, but not limited to, the first annular body 2 or any of its lips 52, the second annular body 4 or any of its lips 64, the third annular body 6 or any of its lips 82, or the fourth annular body 8, or its at least one lip 92) may not include a polymer, and more particularly, may be essentially free of any/all polymers. In a particular aspect, the seal 1 (or any of its subcomponents including, but not limited to, the first annular body 2 or any of its lips 52, the second annular body 4 or any of its lips 64, the third annular body 6 or any of its lips 82, or the fourth annular body 8, or its at least one lip 92) may comprise a single material free of any coating or surface layer. In a certain aspect, the seal 1 (or any of its subcomponents including, but not limited to, the first annular body 2 or any of its lips 52, the second annular body 4 or any of its lips 64, the third annular body 6 or any of its lips 82, or the fourth annular body 8, or its at least one lip 92) can be formed from a monolithic construction. In another aspect, the seal 1 (or any of its subcomponents including, but not limited to, the first annular body 2 or any of its lips 52, the second annular body 4 or any of its lips 64, the third annular body 6 or any of its lips 82, or the fourth annular body 8, or its at least one lip 92) can be formed from multiple components joined together by any means recognizable in the art, such as, for example, by mechanical deformation (e.g., crimping or splines), adhesive, welding, melting, or any combination thereof. As shown in FIGs. 1A and 9, for example, the first annular body 2 may be split into two components 2a, 2b by a cut 302 in the body 2. The cut 302 may be angled or straight in a plane in the axial direction. The cut 302 may have different sections having different slopes. The cut 302 may aid in providing improved sealing properties of the seal 1 during and after installation.

In a number of embodiments, at least one of the first split 104 of the second annular body 4, or the first split 106 of the third annular body 6 may be a straight cut. The straight cut may be perpendicular to a plane in the axial direction as shown in FIG. 1B. In a number of embodiments, at least one of the first split 104 of the second annular body 4, or the first split 106 of the third annular body 6 may be an angled cut. The angled cut may be offset by an angle α to a plane perpendicular to a plane in the axial direction as shown in FIG. 1B. The angle α may be within the range of -90° ≤ α ≤ 90°. In a number of embodiments, as shown in

FIG. 1B, the at least one of the first split 104 of the second annular body 4, or the first split 106 of the third annular body 6 may include two different sections having two different slopes. In such a way, the split 104, 106 may be tapered to form the circumferential ends of the second annular body 4, or the third annular body 6 including two different sections 301, 303 having two different slopes in at least one of the radial or axial direction.

In a number of embodiments, as shown in FIG. 2B, the first and second circumferential ends 20, 22 of the first annular body 2 may include a flared male end and a grooved female end respectively. In a number of embodiments, as shown in FIG. 2B, the first and second circumferential ends 30, 32 of the second annular body 4 may include a flared male end and a grooved female end respectively. In a number of embodiments, as shown in FIG. 2B, the first and second circumferential ends 40, 42 of the third annular body 6 may include a flared male end and a grooved female end respectively. In a number of embodiments, the flared male end may have a flange 220 in the circumferential direction and flange 222 in at least one of the radial or axial direction. The flange 222 may surround the entirety of the male circumferential end of the first annular body 2, second annular body 4, or third annular body 6. In a number of embodiments, the grooved female end may have a groove 224 in at least one of the radial or axial direction. The groove 224 may surround the entirety of the male circumferential end of the first annular body 2, second annular body 4, or third annular body 6 and may couple the flared male end to the grooved female end. In a number of embodiments, the flared male end and a grooved female end of the first annular body 2 may be adapted to mate and circumferentially lock the circumferential ends 20, 22 of the first annular body 2. In a number of embodiments, the flared male end and a grooved female end of the second annular body 4 may be adapted to mate and circumferentially lock the circumferential ends 30, 32 of the second annular body 4. In a number of embodiments, the flared male end and a grooved female end of the third annular body 6 may be adapted to mate and circumferentially lock the circumferential ends 40, 42 of the third annular body 6.

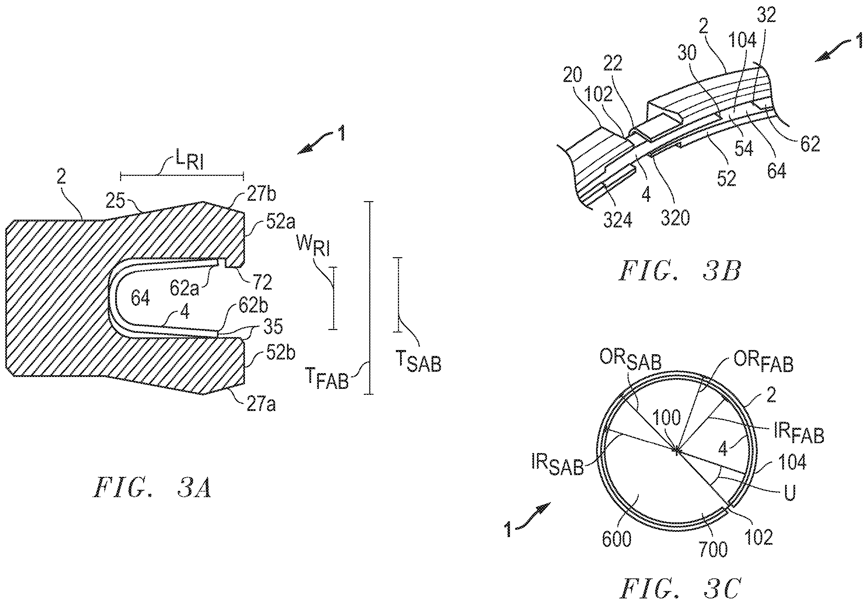

In a number of embodiments, as shown in FIG. 3B, the first and second circumferential ends 20, 22 of the first annular body 2 may include a tongued male end and a grooved female end respectively. In a number of embodiments, as shown in FIG. 2B, the first and second circumferential ends 30, 32 of the second annular body 4 may include a tongued male end and a grooved female end respectively. In a number of embodiments, as shown in FIG. 2B, the first and second circumferential ends 40, 42 of the third annular body 6 may include a tongued male end and a grooved female end respectively. In a number of embodiments, the tongued male end may have a flange 320 in the circumferential direction. In a number of embodiments, the grooved female end may have a groove 324 in at least one of the radial or axial direction. The groove 324 may surround the entirety of the male circumferential end of the first annular body 2, second annular body 4, or third annular body 6 and may couple the tongued male end to the grooved female end. In a number of embodiments, the tongued male end and a grooved female end of the first annular body 2 may be adapted to mate and circumferentially lock the circumferential ends 20, 22 of the first annular body 2. In a number of embodiments, the tongued male end and a grooved female end of the second annular body 4 may be adapted to mate and circumferentially lock the circumferential ends 30, 32 of the second annular body 4. In a number of embodiments, the tongued male end and a grooved female end of the third annular body 6 may be adapted to mate and circumferentially lock the circumferential ends 40, 42 of the third annular body 6.

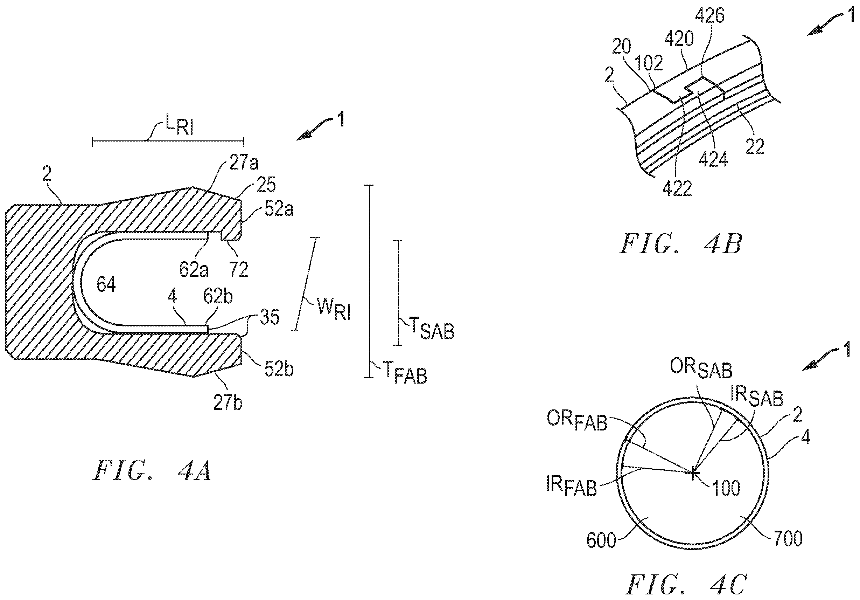

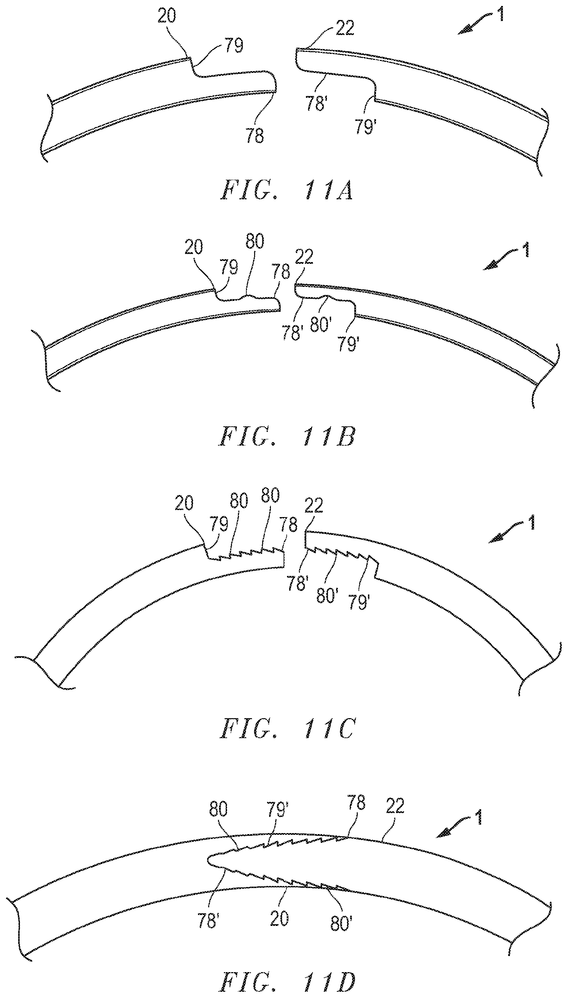

In a number of embodiments, not claimed, as shown in FIG. 4B, the first and second circumferential ends 20, 22 of the first annular body 2 may include a first hook side end defining a first edge step, and a second hook side end defining a second edge step. In a number of embodiments, as shown in FIG. 2B, the first and second circumferential ends 30, 32 of the second annular body 4 may include a first hook side end defining a first edge step, and a second hook side end defining a second edge step. In a number of embodiments, as shown in FIG. 2B, the first and second circumferential ends 40, 42 of the third annular body 6 may include a first hook side end defining a first edge step, and a second hook side end defining a second edge step. In a number of embodiments, the first hook side end 420 defines a first edge step 422 in the radial direction, and the second hook side end 424 defines a second edge step 426 in the radial direction. In a number of embodiments, the first hook side end 420 defines a first edge step 422 in the axial direction, and the second hook side end 424 defines a second edge step 426 in the axial direction. In a number of embodiments, the first hook side end 420 may couple to the second hook side end 424 through an overlap, engagement, or coupling with their respective edge steps 422, 426. In a number of embodiments, the first hook side end and the second hook side end of the first annular body 2 may be adapted to mate and circumferentially lock the circumferential ends 20, 22 of the first annular body 2. In a number of embodiments, the first hook side end and the second hook side end of the second annular body 4 may be adapted to mate and circumferentially lock the circumferential ends 30, 32 of the second annular body 4. In a number of embodiments, the first hook side end and the second hook side end of the third annular body 6 may be adapted to mate and circumferentially lock the circumferential ends 40, 42 of the third annular body 6. As a non claimed alternative to the split designs listed, the seal 1 (including any of the first annular body 2, the second annular body 4, or the third annular body 6) may be split by a butt or skieve geometry. In an alternative non claimed embodiment, as shown in FIG. 11A, the first and second circumferential ends 20, 22 of the first annular body 2 or the seal itself 1(including any additional components) may include a sloped "S" configuration in the radial or axial direction with a male tongue 78, 78' and a female groove 79, 79' on each circumferential end 20, 22. In a further alternative embodiment, as shown in FIG. 11B, the first and second circumferential ends 20, 22 of the first annular body 2 or the seal itself 1(including any additional components) may include a sloped "S" configuration in the radial or axial direction with a male tongue 78, 78' and a female groove 79, 79' on each circumferential end 20, 22 with an additional bump 80, 80' on the surface of the male tongue 78, 78'. This bump 80, 80' may prevent shrinkage of the seal 1. In a further alternative embodiment, as shown in FIG. 11C, the first and second circumferential ends 20, 22 of the first annular body 2 or the seal itself 1(including any additional components) may include a sloped "S" configuration in the axial or radial direction with a male tongue 78, 78' and a female groove 79, 79' on each circumferential end 20, 22 with a plurality of additional bumps 80, 80' on the surface of the male tongue 78, 78' to form a ratchet or ratchet-like attachment. In a further alternative embodiment, as shown in FIG. 11D, the first and second circumferential ends 20, 22 of the first annular body 2 or the seal itself 1(including any additional components) may include a male-female spear configuration in the axial or radial direction with a male tongue 78 and a female groove 79' on each circumferential end 20, 22 with a plurality of additional bumps 80, 80' on the surface of the male tongue 78 and the female groove 79' to form a ratchet or ratchet-like attachment.

In a particular aspect, the seal 1 (or any of its subcomponents including, but not limited to, the first annular body 2 or any of its lips 52, the second annular body 4 or any of its lips 64, the third annular body 6 or any of its lips 82, or the fourth annular body 8, or its at least one lip 92) can further include one or more fillers, such as graphite, glass, aromatic polyester (EKONOL^{®}), bronze, zinc, boron nitride, carbon, and/or polyimide. Concentrations of each of these fillers in a polymer such as PTFE may be greater than 1%, such as greater than 5%, greater than 10% or even greater than 20% by weight.

In addition, the seal 1 (or any of its subcomponents including, but not limited to, the first annular body 2 or any of its lips 52, the second annular body 4 or any of its lips 64, the third annular body 6 or any of its lips 82, or the fourth annular body 8, or its at least one lip 92) can further include lubrication to enhance sliding characteristics against the shaft. Exemplary lubricants can include molybdenum disulfide, tungsten disulfide, graphite, grapheme, expanded graphite, boron nitrade, talc, calcium fluoride, or any combination thereof. Additionally, the lubricant can comprise alumina, silica, titanium dioxide, calcium fluoride, boron nitride, mica, Wollastonite, silicon carbide, silicon nitride, zirconia, carbon black, pigments, or any combination thereof.

In a number of particular embodiments, the first annular body 2 may include an elastomer, plastic or polymer, polyurethane, metal, or composite fiber. In a number of embodiments, the first annular body 2 may include a composite fiber comprising one or a combination of silicone, carbon, aramid, rayon, kynol, Kevlar, cotton, and polytetrafluoroethylene (PTFE), or rubber fibers. In a number of embodiments, the first annular body 2 may include a resilient polymer. In a number of embodiments, the first annular body 2 may include a resilient polymer including one of a silicone, polytetrafluoroethylene (PTFE), or rubber. In a number of particular embodiments, the second annular body 4 can include an energizer adapted to provide an outward force on the first lip 52a and the second lip 52b of the first annular body 2 to enhance sealing performance and provide a spring-energized seal 1. In a number of embodiments, the second annular body 4 can include a metal. In a number of embodiments, the second annular body 4 can include a metal spring. The second annular body 4 can include a metal or alloy (such as, but not limited to, aluminum, zinc, copper, magnesium, tin, platinum, titanium, tungsten, lead, iron, bronze, steel, spring steel, stainless steel) In a number of embodiments, second annular body 4 can include a metal including a metallic spring comprising an aluminum, nickel, iron, or chromium alloy. In a number of embodiments, the second annular body 4 may include elastomer, foam, silicone, fluorocarbons, ethylene propylene diene Monomer (M-class) rubber (EPDM), nitrile, a sponge, or a metallic spring. For example, the second annular body 4 may be made from a 50 A durometer material. In an embodiment, the second annular body 4 may be manufactured by a method conventional in the art such as, but not limited to, metalworking, forming, forging, extrusion, molding, printing, or may be another type. In a number of particular embodiments, the third annular body 6 may include an elastomer, plastic or polymer, polyurethane, metal, or composite fiber. In a number of embodiments, the third annular body 6 may include a composite fiber comprising one or a combination of silicone, carbon, aramid, rayon, kynol, Kevlar, cotton, and polytetrafluoroethylene (PTFE), or rubber fibers. In a number of embodiments, the third annular body 6 may include a resilient polymer. In a number of embodiments, the third annular body 6 may include a resilient polymer including one of a silicone, polytetrafluoroethylene (PTFE), or rubber.

In a number of embodiments, the second annular body 4 material and shape may be selected to have appropriate stress/strain characteristics. In a number of embodiments, the second annular body 4 has a spring constant which dictates how much sealing force may be applied to the matrix. The second annular body 4 may apply a spring load of 1 lb/in, although spring loads in the range of 0.5-10 lb/in are also suitable for exemplary embodiments. The seal force applied to the first annular body 2 by the second annular body 4 can be varied by using energizer materials of different hardness and foams with different densities. The range of deflection within these materials will also dictate the load force applied. The second annular body 4 may be selected to be less rigid than the first annular body 2 so that the second annular body 4 may deform before the first annular body 2. At the same stress level, the strain on the second annular body 4 should typically be an order of magnitude or higher than the first annular body 2.

In a number of embodiments, the seal 1 (or any of its subcomponents including, but not limited to, the first annular body 2 or any of its lips 52, the second annular body 4 or any of its lips 64, the third annular body 6 or any of its lips 82, or the fourth annular body 8, or its at least one lip 92) can be untreated or treated to enhance the physical or chemical properties thereof. For example, in particular embodiments, the seal 1 can be treated using techniques such as laser melting or ablation, mechanical sandblasting or chemical picking. In further embodiments, the seal 1 can be treated by galvanizing, chromate or phosphate treatments, or anodizing. In a number of embodiments, the surface 35 of the seal 1 may include a surface finish that cannot be achieved by machining. In a number of embodiments, the surface 35 of the seal 1 may be polished. In a number of embodiments, the seal 1 may have a surface finish provided by electrolytic polishing.

In a number of embodiments, the surface 35 finish of the seal 1 (or any of its subcomponents including, but not limited to, the first annular body 2 or any of its lips 52, the second annular body 4 or any of its lips 64, the third annular body 6 or any of its lips 82, or the fourth annular body 8, or its at least one lip 92) may provide a surface roughness average Ra not greater than 0.1 µm, such as not greater than 0.05 µm, such as not greater than 0.01 µm, such as not greater than 0.005 µm, or such as not greater than 0.001 µm. In a number of embodiments, the surface 35 finish of seal 1 (or any of its subcomponents including, but not limited to, the first annular body 2 or any of its lips 52, the second annular body 4 or any of its lips 64, the third annular body 6 or any of its lips 82, or the fourth annular body 8, or its at least one lip 92) may provide surface maximum height of the profile Rt of not greater than 0.6 µm, such as not greater than 0.5 µm, such as not greater than 0.1 µm, such as not greater than 0.05 µm, or such as not greater than 0.01 µm.

In a particular aspect, the first annular body 2, second annular body 4, or third annular body 6 can have a generally U-shaped cross section when viewed in a direction perpendicular to a plane extending radially from the central axis 100. In another aspect, the first annular body 2, second annular body 4, or third annular body 6 can have any other shape when viewed in a direction perpendicular to a plane extending radially from the central axis 100, such as, for example, a generally I-shape, a generally J-shape, or even a generally L-shape.

In a particular aspect, the seal 1 (or any of its subcomponents including, but not limited to, the first annular body 2 or any of its lips 52, the second annular body 4 or any of its lips 64, the third annular body 6 or any of its lips 82, or the fourth annular body 8, or its at least one lip 92) can comprise a material having a Brinell hardness (HB) in a range between and including about 70 to about 150, such as in a range between about 75 to about 145, in a range between about 80 to about 140, in a range between about 85 to about 135, in a range between about 90 to about 130, in a range between about 95 to about 125, in a range between about 100 to about 120, or even in a range between about 105 to about 115.

In another particular aspect, the seal 1 (or any of its subcomponents including, but not limited to, the first annular body 2 or any of its lips 52, the second annular body 4 or any of its lips 64, the third annular body 6 or any of its lips 82, or the fourth annular body 8, or its at least one lip 92) can comprise a material having an ultimate tensile strength or material strength of at least about 350 megapascal (MPa), such as at least about 360 MPa, at least about 370 MPa, at least about 380 MPa, at least about 390 MPa, at least about 400 MPa, or even at least about 410 MPa. In further embodiments, the annular body 2 can comprise a material having an ultimate tensile strength of no greater than about 5000 MPa, such as no greater than about 4000 MPa, no greater than about 2000 MPa, no greater than about 1000 MPa, or even no greater than about 500 MPa. Moreover, the seal 1 can comprise a material having a tensile strength within a range between and including any of the values described above, such as, for example, between about 500 MPa and about 1800 MPa.

In another aspect, the seal 1 (or any of its subcomponents including, but not limited to, the first annular body 2 or any of its lips 52, the second annular body 4 or any of its lips 64, the third annular body 6 or any of its lips 82, or the fourth annular body 8, or its at least one lip 92) can comprise a material having a Modulus of Elasticity (MOE) of between about 50 GPa and about 1000 MPa, such as between about 65 GPa and about 750 GPa, between about 75 GPa and about 500 GPa, between about 80 GPa and about 250 GPa, between about 85 GPa and about 200 GPa, between about 95 GPa and about 150 GPa, or even between about 100 GPa and about 130 GPa. In a more particular embodiment, the seal 1 can comprise a material having an MOE of between about 100 GPa and about 300 GPa.

In another aspect, the seal 1 (or any of its subcomponents including, but not limited to, the first annular body 2 or any of its lips 52, the second annular body 4 or any of its lips 64, the third annular body 6 or any of its lips 82, or the fourth annular body 8, or its at least one lip 92) can comprise a material having a Poisson's ratio of between about .5 to about .1, such as between about .45 to about .15, such as between about .4 to about .2, such as between about .35 to about .25. In a more particular embodiment, the seal 1 can comprise a material having a Poisson's ratio of between about .2 and .4.

In a further aspect, the seal 1 (or any of its subcomponents including, but not limited to, the first annular body 2 or any of its lips 52, the second annular body 4 or any of its lips 64, the third annular body 6 or any of its lips 82, or the fourth annular body 8, or its at least one lip 92) can comprise a material having a coefficient of thermal expansion (CTE) of between about 1,8 x 10⁻⁶ mm/mm°C (1 x 10⁻⁶ in/in°F) and about 135 x 10⁻⁶ mm/mm°C (75 x 10⁻⁶ in/in°F), such as between about 3,6 x 10⁻⁶ mm/mm°C (2 x 10⁻⁶ in/in°F) and about 90 x 10⁻⁶ mm/ mm°C (50 x 10⁻⁶ in/in°F), between about 5,4 x 10⁻⁶ mm/mm°C (3 x 10⁻⁶ in/in°F) and about 45 x 10⁻⁶ mm/mm°C (25 x 10⁻⁶ in/in°F), between about 9 x 10⁻⁶ mm/mm°C (5 x 10⁻⁶ in/in°F) and about 27 x 10⁻⁶ mm/mm°C (15 x 10⁻⁶ in/in°F), or even between about 12,6 x 10⁻⁶ mm/mm°C (7 x 10⁻⁶ in/in°F) and about 19,8 x 10⁻⁶ mm/mm°C (11 x 10⁻⁶ in/in°F).

In yet a further aspect, the seal 1 (or any of its subcomponents including, but not limited to, the first annular body 2 or any of its lips 52, the second annular body 4 or any of its lips 64, the third annular body 6 or any of its lips 82, or the fourth annular body 8, or its at least one lip 92) can comprise a material having an elongation at break (EAB) of no greater than about 60%, such as no greater than about 55%, no greater than about 50%, no greater than about 45%, no greater than about 40%, no greater than about 30%, no greater than about 20%, or even no greater than about 10%. In further embodiments, the annular body 2 can comprise a material having an EAB of no less than about 0.5%, such as no less than about 1%, no less than about 2%, or even no less than about 5%. Moreover, the seal 1 can comprise a material having an EAB within a range between and including any of the values described above, such as, for example, between about 45% and about 55%.

In a number of embodiments, the seal 1 (or any of its subcomponents including, but not limited to, the first annular body 2 or any of its lips 52, the second annular body 4 or any of its lips 64, the third annular body 6 or any of its lips 82, or the fourth annular body 8, or its at least one lip 92) can comprise a coating 20 on its surface 35. In a number of embodiments, the coating 20 may include a material having a low temperature hard coating, such as, for example, a diamond-like coating (DLC) impregnated therein. In particular embodiments, the DLC can have a lattice structure similar to a diamond, where each carbon atom comprises four carbon atoms equally spaced. Alternatively, the seal 1 (or any of its subcomponents including, but not limited to, the first annular body 2 or any of its lips 52, the second annular body 4 or any of its lips 64, the third annular body 6 or any of its lips 82, or the fourth annular body 8, or its at least one lip 92) can comprise a material impregnated therein by use of a high velocity oxygen fuel (HVOF) coating. HVOF coatings can extend sealing surface life by significantly increasing the sealing element's resistance to wear and corrosion. Moreover, HVOF coatings can affect a smoother surface finish with bond strengths in excess of approximately 10,000 pounds per square inch.

In an aspect, the seal 1 can be adapted to operate within a wide temperature range while simultaneously maintaining effective sealing rates. For example, the seal 1 can be adapted to operate at temperatures within a range between about -275°C and about 300°C, such as within a range between about -250°C and about 250°C, within a range between about -100°C and about 100°C, or even within a range between about -40°C and about 20°C, while exhibiting a leakage rate of less than about 10 mL/min/mm, such as less than about 9 mL/min/mm, less than about 8 mL/min/mm, less than about 7 mL/min/mm, less than about 6 mL/min/mm, less than about 5 mL/min/mm, less than about 4 mL/min/mm, less than about 3 mL/min/mm, less than about 2 mL/min/mm, less than about 0 mL/min/mm, less than about 0.75 mL/min/mm, less than about 0.5 mL/min/mm, less than about 0.25 mL/min/mm, less than about 0.1 mL/min/mm, or even less than about 0.01 mL/min/mm. Moreover, the seal 1 can be adapted to operate within the above described temperature range while having a leakage rate of about 0 mL/min/mm.

In a number of embodiments, the components of the assembly 200 (including, but not limited to, the housing 201, bonnet 204a, 204b, or stem 202) can include any material commonly used in the seal arts. The components of the assembly 200 can comprise any suitable material with sufficient rigidity to withstand axial and longitudinal forces. In a particular embodiment, the components of the assembly 200 (including, but not limited to, the housing 201, bonnet 204a, 204b, or stem 202) can include a polymer, such as, for example, ultra-high molecular weight polyurethane (UHMWPE), poly(vinyl chloride) (PVC), a polyketone, a polyaryletherketone (PEAK) such as polyether ether ketone (PEEK), a polyaramid, a polyimide, a polytherimide, a polyphenylene sulfide, a polyetherslfone, a polysulfone, a polypheylene sulfone, a polyamideimide, ultra high molecular weight polyethylene, a fluoropolymer, a polyamide, a polybenzimidazole, or any combination thereof. An example fluoropolymer includes fluorinated ethylene propylene (FEP), polytetrafluoroethylene (PTFE), polyvinylidene fluoride (PVDF), perfluoroalkoxy (PFA), a terpolymer of tetrafluoroethylene, hexafluoropropylene, and vinylidene fluoride (THV), polychlorotrifluoroethylene (PCTFE), ethylene tetrafluoroethylene copolymer (ETFE), ethylene chlorotrifluoroethylene copolymer (ECTFE), aliphatic polyamides, or even para-aramids such as Kevlar^{®}, or any combination thereof. The polymer may be injection-molded. In another embodiment, the components of the assembly 200 can comprise a metal or alloy (such as, but not limited to, aluminum, chromium, nickel, zinc, copper, magnesium, tin, platinum, titanium, tungsten, lead, iron, bronze, steel, spring steel, stainless steel) formed through a machining process. In yet another embodiment, the components of the assembly 200 can comprise a ceramic or any other suitable material. The components of the assembly 200 can be formed from a single piece, two pieces, or several pieces joined together by welding, adhesive, fasteners, threading, or any other suitable fastening means.

In a particular aspect, the components of the assembly 200 (including, but not limited to, the housing 201, bonnet 204a, 204b, or stem 202) can further include one or more fillers, such as graphite, glass, aromatic polyester (EKONOL^{®}), bronze, zinc, boron nitride, carbon, and/or polyimide. Concentrations of each of these fillers in a polymer such as PTFE may be greater than 1%, such as greater than 5%, greater than 10% or even greater than 20% by weight.

In addition, the components of the assembly 200 (including, but not limited to, the housing 201, bonnet 204a, 204b, or stem 202) can further include lubrication to enhance sliding characteristics against the shaft. Exemplary lubricants can include molybdenum disulfide, tungsten disulfide, graphite, grapheme, expanded graphite, boron nitrade, talc, calcium fluoride, or any combination thereof. Additionally, the lubricant can comprise alumina, silica, titanium dioxide, calcium fluoride, boron nitride, mica, Wollastonite, silicon carbide, silicon nitride, zirconia, carbon black, pigments, or any combination thereof.

The components of the assembly 200 (including, but not limited to, the housing 201, bonnet 204a, 204b, or stem 202) can comprise a homogenous composition or may comprise two or more discrete portions having different compositions. The components of the assembly 200 (including, but not limited to, the housing 201, bonnet 204a, 204b, or stem 202) can be formed from a single piece, two pieces, or several pieces joined together by melting, sintering, welding, adhesive, fasteners, threading, or any other suitable fastening means. Moreover, in one non-limiting embodiment, although not applicable to all embodiments, the components of the assembly 200 (including, but not limited to, the housing 201, bonnet 204a, 204b, or stem 202) may not include a polymer, and more particularly, may be essentially free of any/all polymers. In a particular aspect, the components of the assembly 200 (including, but not limited to, the housing 201, bonnet 204a, 204b, or stem 202) may comprise a single material free of any coating or surface layer.

According to still another aspect, there may be provided a method including providing a first fluid component (204a, 204b) having an axis 100 and a first end (204a', 204b') and a second fluid component (204b, 202) having an axis 100 and a second end (204b', 202'); and further providing a seal 1 having a first annular body 2 having an inner radius IR_{FAB} and an outer radius OR_{FAB}, and a first circumferential end 20 and a second circumferential end 22 defining a first split 102 along the circumference of the first annular body 2; and a second annular body 4 having an inner radius IR_{SAB} and an outer radius OR_{SAB}, and a first circumferential end 30 and a second circumferential end 32 defining a first split 104 along the circumference of the second annular body 4, where the circumferential split 102 of the first annular body 2 may be offset from the circumferential split 104 of the second annular body 4 at an arc distance defined by a central angle C, where the central angle C may be no less than 15°, such as no less than 30°, such as no less than 45°, such as no less than 60°, or such as no less than 90°, or where the second annular body 4 may be adapted to force the first split 102 of the first annular body 2 to close around a fluid component (204a, 204b, 202). The method may further include positioning the seal 1 in contact with the first end (204a', 204b') of the first fluid component (204a, 204b) to the second end (204b', 202') of the second fluid component (204b, 202) to seal the first fluid component (204a, 204b) and the second fluid component (204b, 202) in at least one of an axial and radial direction relative to the seal 1.

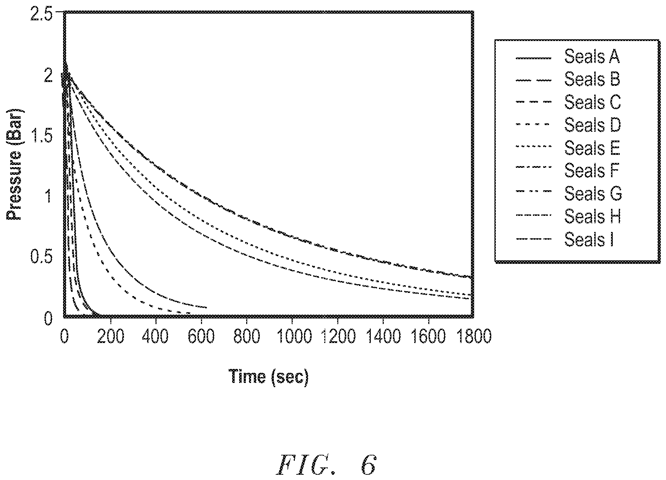

FIG. 6 shows a graph of time (sec) vs. pressure (bar) for a seal 1 in accordance with a number of embodiments and prior art seals. Seal A shows a seal 1 embodiment as shown in FIG. 2A. Seal B shows a seal 1 embodiment as shown in FIG. 3A. Seal C shows a seal 1 embodiment as shown in FIG. 4A. Seal D shows a seal 1 embodiment as shown in FIG. 1A. Seal E shows a 2 in 1 big heel seal 1 embodiment as shown in FIG. 5A. Seal F shows a prior art seal. Seal G shows a prior art seal. Seal H shows a seal 1 embodiment as shown in FIG. 8B. Seal I shows a seal 1 embodiment as shown in FIG. 8D. As shown, several of the seals perform with a higher pressure drop at a shorter time than the prior art seal as shown.

The seal 1, assembly 200 or method described above may provide higher reliability and quality of sealing in difficult installation spaces and under more severe operating conditions (such as greater than 3 ksi pressure, greater than 200°C temperature, less than 1 ksi pressure, less than 0°C temperature). They may provide at least one of high elasticity, high strength, high strain at break, maximum sealing capacity, minimum friction, or minimum plastic deformation under these operating conditions. Further, the sealing of the seal 1 through the first lip and/or the second lip may be decoupled, making it easier to handle tolerances within the assembly 200 without significantly influencing sealing strength. Lastly, the splits in the annular bodies 2, 4, 6, of the seal 1 work together to provide ease of installation as a simple, versatile, and more robust solution compared to standard installation tools or regular spring-energized seals. The installation may reduce the number of installation steps using the seal 1 from 3-5 steps down to 1 step where additional tools may not be needed. Ease of installation may be facilitated due to a split formed in the annular bodies 2, 4, 6 of the seal 1, although the assembly may be solid in some embodiments.

Many different aspects and embodiments are possible. After reading this specification, skilled artisans will appreciate that those aspects and embodiments are only illustrative and do not limit the scope of the present invention. This written description uses examples, including the best mode, and also to enable those of ordinary skill in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. For example, embodiments may relate to rotational devices such as an electric motor, such as a windshield wiper motor), or axial sliding applications, such as a steering column adjustment mechanism.

Note that not all of the features described above are required, that a portion of a specific feature may not be required, and that one or more features may be provided in addition to those described. Still further, the order in which features are described is not necessarily the order in which the features are installed.

Certain features are, for clarity, described herein in the context of separate embodiments, may also be provided in combination in a single embodiment. Conversely, various features that are, for brevity, described in the context of a single embodiment, may also be provided separately or in any subcombinations.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims.

The specification and illustrations of the embodiments described herein are intended to provide a general understanding of the structure of the various embodiments. The specification and illustrations are not intended to serve as an exhaustive and comprehensive description of all of the elements and features of apparatus and systems that use the structures or methods described herein. Separate embodiments may also be provided in combination in a single embodiment, and conversely, various features that are, for brevity, described in the context of a single embodiment, may also be provided separately or in any subcombination. Further, reference to values stated in ranges includes each and every value within that range. Many other embodiments may be apparent to skilled artisans only after reading this specification. Other embodiments may be used and derived from the disclosure, such that a structural substitution, logical substitution, or any change may be made. Accordingly, the disclosure is to be regarded as illustrative rather than restrictive, the invention being only limited by the scope of the appended claims.

## Claims

1. A seal (1) comprising:
a first annular body (2) having an inner radius (IR_{FAB}) and an outer radius (OR_{FAB}), and a first circumferential end (20) and a second circumferential end (22) defining a first split (102) along the circumference of the first annular body, wherein the first annular body has first and second lips (52a, 52b); and
a second annular body (4) comprising an energizer having an inner radius (IR_{SAB}) and an outer radius (OR_{SAB}), wherein the second annular body is adapted to force the first split of the first annular body to close around a fluid component (204a, 204b, 202), wherein the energizer is positioned between the first and second lip of the first annular body and adapted to force the first and second lip apart,
wherein the circumferential first split of the first annular body (2) is offset from a circumferential second split (104) of the second annular body (4) at an arc distance defined by a central angle C, wherein the central angle C is no less than 15°; and,
wherein the second annular body (4) is generally cylindrical and further includes an aperture (700), the aperture (700) being substantially coaxial with the central axis (100) of the seal (1) and substantially coaxial with the aperture (600) of the first annular body (2),
**characterized in that** the first and second circumferential ends of the first annular body comprise:
1) a flared male end with a U-shaped cross section when viewed in a direction perpendicular to a plane extending radially from a central axis (100) of the seal and a grooved female end, respectively;
2) a sloped "S" configuration in the radial or axial direction with a male tongue (78, 78') and a female groove (79, 79') on each circumferential end (20, 22) with an additional bump (80, 80') on the surface of the male tongue (78, 78');
3) a sloped "S" configuration in the axial or radial direction with a male tongue (78, 78') and a female groove (79, 79') on each circumferential end with a plurality of additional bumps (80, 80') on the surface of the male tongue (78, 78') to form a ratchet or ratchet-like attachment; or
4) a spear configuration in the axial or radial direction with a male tongue (78, 78') and a female (79, 79') groove on each circumferential end with a plurality of additional bumps (80, 80') on the surface of the male tongue (78, 78') and the female groove (79, 79') to form a ratchet or ratchet-like attachment.

2. An assembly (200) comprising:
a first fluid component (204a, 204b, 202) having an axis (100) and a first end (204a', 204b', 202');
a second fluid component (204a, 204b, 202) having an axis (100) and a second end (204a', 204b', 202'); and
the seal (1) of claim 1 operatively connecting the first end of the first fluid component to the second end of the second fluid component.

3. The seal or assembly of any of claims 1-2, wherein the first lip and the second lip define a recess (54) in the first annular body to form a U-shaped cross-section in the radial direction.

4. The seal or assembly of claim 3, wherein the second annular body is disposed within the recess formed between the first lip and the second lip of the first annular body.

5. The seal or assembly of claim 3, wherein the first annular body comprises at least one axial step (72) to radially lock the second annular body to the first annular body.

6. The seal or assembly of any of claims 1-2, wherein the first annular body comprises an elastomer, polymer, polyurethane, metal, or composite fiber.

7. The seal or assembly of claim 6, wherein the first annular body comprises a composite fiber comprising one or a combination of silicone, carbon, aramid, rayon, kynol, Kevlar, cotton, and polytetrafluoroethylene (PTFE), or rubber fibers.

8. The seal or assembly of any of claims 1-2, wherein the energizer comprises a metallic spring comprising an aluminum, nickel, iron, or chromium alloy.

9. The seal or assembly of any of claims 1-2, wherein the energizer comprises elastomer, foam, silicone, fluorocarbons, ethylene propylene diene Monomer (M-class) rubber (EPDM), nitrile, a sponge, or a metallic spring.

10. The seal or assembly of any of claims 1-2, wherein the seal further comprises a third annular body (6) having an inner radius (IR_{TAB}) and an outer radius (OR_{TAB}), and a third split (106) along its circumference, wherein the third annular body comprises a first radial lip (82a) and a second radial lip (82b) adapted to at least partially surround the first annular body in at least one of the axial or radial direction.

11. The seal or assembly of claim 10, wherein the third annular body has a U-shaped cross-section.

12. The seal or assembly of claim 10, wherein the third annular body comprises an elastomer, polymer, polyurethane, metal, or composite fiber.

13. The seal or assembly of claim 10, wherein the seal further comprises a fourth annular body (8) having an inner radius (IR_{FOAB}) and an outer radius (OR_{FOAB}), and a fourth split (206) along its circumference, wherein the fourth annular body comprises a at least one axial or radial lip (92) adapted to form a mechanical connection with the third annular body.

## Patentansprüche

1. Dichtung (1), umfassend:
einen ersten ringförmigen Körper (2) mit einem inneren Radius (IR_{FAB}) und einem äußeren Radius (OR_{FAB}), und einem ersten umlaufenden Ende (20) und einem zweiten umlaufenden Ende (22), die einen ersten Spalt (102) entlang des Umfangs des ersten ringförmigen Körpers definieren, wobei der erste ringförmige Körper erste und zweite Lippen (52a, 52b) aufweist; und
einen zweiten ringförmigen Körper (4), der einen Energetisierer mit einem inneren Radius (IR_{SAB}) und einem äußeren Radius (OR_{SAB}) umfasst, wobei der zweite ringförmige Körper ausgelegt ist, um den ersten Spalt des ersten ringförmigen Körpers zu zwingen, sich um eine Fluidkomponente (204a, 204b, 202) zu schließen, wobei der Energetisierer zwischen der ersten und der zweiten Lippe des ersten ringförmigen Körpers positioniert ist und ausgelegt ist, um die erste und die zweite Lippe auseinander zu zwingen,
wobei der umlaufende erste Spalt des ersten ringförmigen Körpers (2) von einem umlaufenden zweiten Spalt (104) des zweiten ringförmigen Körpers (4) um einen Bogenabstand versetzt ist, der durch einen Zentriwinkel C definiert ist, wobei der Zentriwinkel C nicht weniger als 15° beträgt; und,
wobei der zweite ringförmige Körper (4) im Allgemeinen zylindrisch ist und ferner eine Öffnung (700) einschließt, wobei die Öffnung (700) im Wesentlichen koaxial mit der Mittelachse (100) der Dichtung (1) und im Wesentlichen koaxial mit der Öffnung (600) des ersten ringförmigen Körpers (2) ist,
**dadurch gekennzeichnet, dass** das erste und das zweite umlaufende Ende des ersten ringförmigen Körpers umfassen:
1) ein aufgeweitetes männliches Ende mit einem U-förmigen Querschnitt, wenn in einer Richtung senkrecht zu einer Ebene betrachtet, die sich radial von einer Mittelachse (100) der Dichtung erstreckt, bzw. ein weibliches Ende mit Nuten;
2) eine geneigte "S"-Konfiguration in der radialen oder axialen Richtung mit einer männlichen Zunge (78, 78') und einer weiblichen Nut (79, 79') an jedem Umfangsende (20, 22) mit einer zusätzlichen Erhebung (80, 80') auf der Oberfläche der männlichen Zunge (78, 78');
3) eine geneigte "S"-Konfiguration in der axialen oder radialen Richtung mit einer männlichen Feder (78, 78') und einer weiblichen Nut (79, 79') an jedem umlaufenden Ende mit einer Vielzahl von zusätzlichen Erhebungen (80, 80') auf der Oberfläche der männlichen Feder (78, 78'), um eine Ratsche oder ratschenähnliche Befestigung zu bilden; oder
4) eine Speerkonfiguration in der axialen oder radialen Richtung mit einer männlichen Feder (78, 78') und einer weiblichen (79, 79') Nut an jedem umlaufenden Ende mit einer Vielzahl von zusätzlichen Erhebungen (80, 80') auf der Oberfläche der männlichen Feder (78, 78') und der weiblichen Nut (79, 79'), um eine Ratsche oder ratschenähnliche Befestigung zu bilden.

2. Anordnung (200), umfassend:
eine erste Fluidkomponente (204a, 204b, 202) mit einer Achse (100) und einem ersten Ende (204a', 204b', 202');
eine zweite Fluidkomponente (204a, 204b, 202) mit einer Achse (100) und einem zweiten Ende (204a', 204b', 202'); und
die Dichtung (1) nach Anspruch 1, die das erste Ende der ersten Fluidkomponente mit dem zweiten Ende der zweiten Fluidkomponente wirkverbindet.

3. Dichtung oder Anordnung nach einem der Ansprüche 1 bis 2, wobei die erste Lippe und die zweite Lippe eine Aussparung (54) in dem ersten ringförmigen Körper definieren, um einen U-förmigen Querschnitt in der radialen Richtung zu bilden.

4. Dichtung oder Anordnung nach Anspruch 3, wobei der zweite ringförmige Körper innerhalb der Aussparung angeordnet ist, die zwischen der ersten Lippe und der zweiten Lippe des ersten ringförmigen Körpers gebildet ist.

5. Dichtung oder Anordnung nach Anspruch 3, wobei der erste ringförmige Körper mindestens eine axiale Stufe (72) umfasst, um den zweiten ringförmigen Körper radial an dem ersten ringförmigen Körper zu verriegeln.

6. Dichtung oder Anordnung nach einem der Ansprüche 1 bis 2, wobei der erste ringförmige Körper ein Elastomer, Polymer, Polyurethan, Metall oder eine Verbundfaser umfasst.

7. Dichtung oder Anordnung nach Anspruch 6, wobei der erste ringförmige Körper eine Verbundfaser umfasst, die eine oder eine Kombination aus Silikon-, Kohlenstoff-, Aramid-, Viskose-, Kynol-, Kevlar-, Baumwoll- und Polytetrafluorethylen-(PTFE)- oder Gummifasern umfasst.

8. Dichtung oder Anordnung nach einem der Ansprüche 1 bis 2, wobei der Energetisierer eine metallische Feder umfasst, die eine Aluminium-, Nickel-, Eisen- oder Chrom-Legierung umfasst.

9. Dichtung oder Anordnung nach einem der Ansprüche 1 bis 2, wobei der Energetisierer Elastomer, Schaum, Silikon, Fluorkohlenstoffe, Ethylen-Propylen-Dien-Monomer-(M-Klasse)-Kautschuk (EPDM), Nitril, einen Schwamm oder eine metallische Feder umfasst.

10. Dichtung oder Anordnung nach einem der Ansprüche 1 bis 2, wobei die Dichtung ferner einen dritten ringförmigen Körper (6) mit einem inneren Radius (IR_{TAB}) und einem äußeren Radius (OR_{TAB}) und einem dritten Spalt (106) entlang seines Umfangs umfasst, wobei der dritte ringförmige Körper eine erste radiale Lippe (82a) und eine zweite radiale Lippe (82b) umfasst, die ausgelegt sind, um den ersten ringförmigen Körper in mindestens einer der axialen oder radialen Richtungen zumindest teilweise zu umgeben.

11. Dichtung oder Anordnung nach Anspruch 10, wobei der dritte ringförmige Körper einen U-förmigen Querschnitt aufweist.

12. Dichtung oder Anordnung nach Anspruch 10, wobei der dritte ringförmige Körper ein Elastomer, Polymer, Polyurethan, Metall oder eine Verbundfaser umfasst.

13. Dichtung oder Anordnung nach Anspruch 10, wobei die Dichtung ferner einen vierten ringförmigen Körper (8) mit einem inneren Radius (IR_{FOAB}) und einem äußeren Radius (OR_{FOAB}) und einem vierten Spalt (206) entlang seines Umfangs umfasst, wobei der vierte ringförmige Körper mindestens eine axiale oder radiale Lippe (92) umfasst, die ausgelegt ist, um eine mechanische Verbindung mit dem dritten ringförmigen Körper zu bilden.

## Revendications

1. Joint d'étanchéité (1) comprenant :
un premier corps annulaire (2) ayant un rayon interne (IR_{FAB}) et un rayon externe (OR_{FAB}), et une première extrémité circonférentielle (20) et une seconde extrémité circonférentielle (22) définissant une première division (102) le long de la circonférence du premier corps annulaire, dans lequel le premier corps annulaire a des première et seconde lèvres (52a, 52b) ; et
un deuxième corps annulaire (4) comprenant un excitateur ayant un rayon interne (IR_{SAB}) et un rayon externe (OR_{SAB}), dans lequel le deuxième corps annulaire est adapté pour forcer la première division du premier corps annulaire à se refermer autour d'un composant fluide (204a, 204b, 202), dans lequel l'excitateur est positionné entre la première et la seconde lèvre du premier corps annulaire et adapté pour séparer de force la première et la seconde lèvre,
dans lequel la première fente circonférentielle du premier corps annulaire (2) est décalée par rapport à une seconde fente circonférentielle (104) du deuxième corps annulaire (4) à une distance d'arc définie par un angle central C, l'angle central C n'étant pas inférieur à 15 ° ; et,
dans lequel le deuxième corps annulaire (4) est généralement cylindrique et comporte en outre une ouverture (700), l'ouverture (700) étant sensiblement coaxiale avec l'axe central (100) du joint d'étanchéité (1) et sensiblement coaxiale avec l'ouverture (600) du premier corps annulaire (2),
**caractérisé en ce que** les première et seconde extrémités circonférentielles du premier corps annulaire comprennent :
1) une extrémité mâle évasée avec une section transversale en forme de U lorsqu'elle est vue dans une direction perpendiculaire à un plan s'étendant radialement à partir d'un axe central (100) du joint et d'une extrémité femelle rainurée, respectivement ;
2) une configuration en « S » inclinée dans la direction radiale ou axiale avec une languette mâle (78, 78') et une rainure femelle (79, 79') sur chaque extrémité circonférentielle (20, 22) avec une bosse supplémentaire (80, 80') sur la surface de la languette mâle (78, 78') ;
3) une configuration en « S » inclinée dans la direction axiale ou radiale avec une languette mâle (78, 78') et une rainure femelle (79, 79') sur chaque extrémité circonférentielle avec une pluralité de bosses supplémentaires (80, 80') sur la surface de la languette mâle (78, 78') pour former un cliquet ou un accessoire de type cliquet ; ou
4) une configuration de harpon dans la direction axiale ou radiale avec une languette mâle (78, 78') et une rainure femelle (79, 79') sur chaque extrémité circonférentielle avec une pluralité de bosses supplémentaires (80, 80') sur la surface de la languette mâle (78, 78') et la rainure femelle (79, 79') pour former un cliquet ou une attache de type cliquet.

2. Ensemble (200) comprenant :
un premier composant de fluide (204a, 204b, 202) ayant un axe (100) et une première extrémité (204a', 204b', 202') ;
un second composant fluide (204a, 204b, 202) ayant un axe (100) et une seconde extrémité (204a', 204b', 202') ; et
le joint d'étanchéité (1) selon la revendication 1 raccordant fonctionnellement la première extrémité du premier composant de fluide à la seconde extrémité du second composant de fluide.

3. Joint d'étanchéité ou ensemble selon l'une quelconque des revendications 1 à 2, dans lequel la première lèvre et la seconde lèvre définissent un évidement (54) dans le premier corps annulaire pour former une section transversale en forme de U dans la direction radiale.

4. Joint ou ensemble selon la revendication 3, dans lequel le deuxième corps annulaire est disposé à l'intérieur de l'évidement formé entre la première lèvre et la seconde lèvre du premier corps annulaire.

5. Joint d'étanchéité ou ensemble selon la revendication 3, dans lequel le premier corps annulaire comprend au moins un pied axial (72) pour verrouiller radialement le deuxième corps annulaire au premier corps annulaire.

6. Joint d'étanchéité ou ensemble selon l'une quelconque des revendications 1 à 2, dans lequel le premier corps annulaire comprend un élastomère, un polymère, un polyuréthane, un métal ou une fibre composite.

7. Joint d'étanchéité ou ensemble selon la revendication 6, dans lequel le premier corps annulaire comprend une fibre composite comprenant un ou une combinaison de silicone, carbone, aramide, rayonne, kynol, Kevlar, coton, et polytétrafluoroéthylène (PTFE), ou des fibres de caoutchouc.

8. Joint d'étanchéité ou ensemble selon l'une quelconque des revendications 1 à 2, dans lequel l'excitateur comprend un ressort métallique comprenant un alliage d'aluminium, de nickel, de fer ou de chrome.

9. Joint d'étanchéité ou ensemble selon l'une quelconque des revendications 1 à 2, dans lequel l'énergisant comprend un élastomère, une mousse, du silicone, des fluorocarbures, de l'éthylène, du propylène-diène, un caoutchouc monomère (classe M) (EPDM), du nitrile, une éponge, ou un ressort métallique.

10. Joint ou ensemble selon l'une quelconque des revendications 1 à 2, dans lequel le joint comprend en outre un troisième corps annulaire (6) ayant un rayon interne (IR_{TAB}) et un rayon externe (OR_{TAB}), et une troisième division (106) le long de sa circonférence, dans lequel le troisième corps annulaire comprend une première collerette radiale (82a) et une seconde collerette radiale (82b) adaptées pour entourer au moins partiellement le premier corps annulaire dans au moins l'un parmi les axes axial ou radial direction.

11. Joint d'étanchéité ou ensemble selon la revendication 10, dans lequel le troisième corps annulaire a une section transversale en forme de U.

12. Joint d'étanchéité ou ensemble selon la revendication 10, dans lequel le troisième corps annulaire comprend un élastomère, un polymère, un polyuréthane, un métal ou une fibre composite.

13. Joint ou ensemble selon la revendication 10, dans lequel le joint comprend en outre un quatrième corps annulaire (8) ayant un rayon interne (IR_{FOAB}) et un rayon externe (OR_{FOAB}), et une quatrième division (206) le long de sa circonférence, dans lequel le quatrième corps annulaire comprend au moins une lèvre axiale ou radiale (92) adaptée pour former une liaison mécanique avec le troisième corps annulaire.
